# EUROPEAN PATENT SPECIFICATION

(11) **EP 0 628 240 B1**
(45) Date of publication and mention of the grant of the patent: **17.11.1999**
(21) Application number: 94201554.6
(22) Date of filing: 03.06.1994
(51) Int. Cl.: A01D 78/10, A01B 73/02

(54) **A hay-making machine**
Heuwerbungsmaschine
Machine de fenaison

(30) Priority: 07.06.1993 NL 9300974
(43) Date of publication of application: 14.12.1994
(73) Proprietor: MAASLAND N.V., 3155 PD Maasland (NL)
(72) Inventor: van den Engel, Alfonsus Jacobus, NL-3137 KC Vlaardingen (NL)
(74) Representative: Corten, Maurice Jean F.M.

(56) References cited:
- EP-A- 0 069 857
- EP-A- 0 165 638
- EP-A- 0 317 746
- EP-A- 0 369 308
- DE-A- 4 111 267
- DE-U- 8 535 012
- DE-U- 8 810 667
- DE-U- 9 010 179
- GB-A- 2 057 239
- US-A- 3 760 575
- US-A- 4 026 093

## Description

The present invention relates to a hay-making machine according to the preamble of claim 1.

A machine of this kind is known from DE-U-85 35 012. In this Gebrauchsmuster a hay-making machine is described having four rake members. The outermost rake members can be pivoted about the upwardly extending pivot shaft in a forward direction through a small angle in order to obtain a better tedding action, and in a rearward direction to a transport position.

From the US-A 4,026,093 a hay-making machine having four rake members is known. The outermost rake member can be pivoted about un upwardly extending pivot shaft in a rearward direction as to obtain a transport position.

The hay-making machines of these types may have four, six or eight rake members which are driven alternately in opposite directions of rotation. The tedded crop is spread laterally to a considerable extent behind the hay-making machine. Spreading the crop in this way is effected through a width larger than that of the machine, which means that, when the machine is driven along a ditch, the rake members throw crop into same. The invention has for its object to obviate, or at least mitigate this disadvantage to a considerable extent.

According to the invention, the above-described hay-making machine is characterized in that the centre line of said upwardly extending pivot shaft forms, in a vertical plane in the direction of operative travel, an angle with the centre line of the rotary shaft of a rake member, the machine having a second working position in which the outermost frame portion is pivoted through an angle of less than 90° about the upwardly directed shaft with respect to the further frame portion such that, relative to the direction of operative travel, it extends in the rearward direction. With this construction it becomes possible for this/these outermost rake member(s) to catch the laterally, outwardly thrown crop and to prevent that it is flung into the ditch.

To enable a practical embodiment of the hay-making machine, the pivotal construction will be incorporated in its totality within the peripheral circle described by the rake member of that frame portion that is not pivotal in the rearward direction, and directly borders on a rake member of the frame portion which can be pivoted rearwardly.

In a practical embodiment of the machine in accordance with the invention, the centre line of the pivot shaft predominantly extending in the direction of operative travel will intersect that of the upwardly directed pivot shaft. The drive mechanism in the region of the pivotal construction preferably comprises a dual universal joint. In a concrete embodiment, the pivotal construction is of such a design that the outermost frame portion can be pivoted upwardly relative to the further frame portion through an angle between approximately 10 and 30°, more specifically approximately 20°, while the further frame portion includes at least one further pivotal construction for pivoting at least the outermost rake member of the further frame portion through approximately 90° with respect to an inner rake member of the further frame portion.

In a first embodiment there is present in the region of the pivotal construction an adjusting cylinder, with the aid of which the outermost frame portion can be pivoted about the pivot shaft extending predominantly in the direction of operative travel, whilst the pivotal motion about the upwardly directed pivot shaft occurs in response to the frictional force the machine experiences during the forward travel over the field. In this embodiment, the pivotal construction will incorporate a locking mechanism for keeping the machine in the first working position and for enabling an upward folding motion to the transport position. For pivoting upwardly to the transport position, the outermost rake member(s) may namely not pivot freely to the rear. In contrast thereto, in the position in which the locking mechanism is released, a rearward motion of the outermost frame portion relative to the further frame portion is possible. The locking mechanism may include a locking hook which is connected to the further frame portion and has an aperture, which locking hook co-operates with a bulging portion which is provided against the outermost frame portion and fits into the aperture of the locking hook.

When, in response to the frictional force exercised on the machine during the forward travel over the field, the outermost frame portion is moved rearwardly, then a stop must be present to limit this rearward motion. Preferably, the rotary motion of the outermost frame portion in the rearward direction will amount to approximately 30°. According to the invention, it is, however, alternatively possible to adjust the angle, through which the outermost frame portion is pivotal in the rearward direction, hydraulically. In that case, the hay-making machine will incorporate in the region of the pivotal construction one or more adjusting cylinders, with the aid of which the outermost frame portion can be pivoted about the pivot shaft predominantly extending in the direction of operative travel and about the upwardly directed pivot shaft relative to the further frame portion.

In a special embodiment in accordance with the invention, the centre line of the upwardly directed pivot shaft is such that it intersects of the drive mechanism. In that event, a first adjusting cylinder can be present, which extends to above the frame and by means of which the outermost frame portion can be pivoted upwardly, and a second adjusting cylinder which extends alongside and, relative to the direction of operative travel of the machine, in front of the frame and with the aid of which the outermost frame portion can be pivoted rearwardly. The pivotal construction then includes more in particular a coupling element which is connected capably of pivoting about the upwardly directed pivot shaft to the outermost frame portion and is connected capably of pivoting about the pivot shaft predominantly extending in the direction of operative travel to the further frame portion, the first adjusting cylinder being active between the coupling element and the further frame portion and the second adjusting cylinder between the coupling element and the outermost frame portion.

In a further embodiment in accordance with the invention, the centre line of the upwardly directed pivot shaft intersects that of the drive mechanism at the rear side relative to the direction of operative travel. In this embodiment, an adjusting cylinder may be present, which extends to above the frame and with the aid of which the outermost frame portion can be pivoted both upwardly and rearwardly. In this embodiment, the pivotal construction will then include a coupling element, which is connected capably of pivoting about the upwardly directed pivot shaft to the outermost frame portion and is connected capably of pivoting about the pivot shaft predominantly extending in the direction of operative travel to the further frame portion, whilst the adjusting cylinder is connected about a pin predominantly extending in the direction of operative travel to the outermost frame portion and to the further frame portion about a pin which is fitted with a ball-and-socket joint and extends upwardly. The centre line of the upwardly directed pin will then intersect both that of the pivot shaft extending predominantly in the direction of operative travel and that of the drive mechanism.

More in particular, in the embodiment in which the upwardly directed pivot shaft intersects the drive mechanism at the rear side, the length of the driving mechanism will have to be extended to a relatively large extent. According to the invention, the shaft of the drive mechanism for driving the rake member(s) on the outermost frame portion will therefore have a telescopically sliding construction, which enables this shaft to be extended.

When the tines of adjacent rake members are in meshing contact and more in particular when they are in addition arranged such that they are trailing, problems may occur when the outermost rake member(s) are moved rearwardly. In the motion of the rake members there may then occur a phase shift of such a nature that the tines of a rearwardly positioned rake member hit those of an adjacent rake member on the further frame portion. In order to solve this problem, the said telescopically sliding construction comprises, in accordance with the invention, two shaft sections, one shaft section of which is provided with a threaded groove and the other with a meshing element which engages this groove so as to enable, upon extension of the length of the two shaft sections relative to each other, a rotation of the two shaft sections relative to each other. This rotation again compensates for the phase shift caused by the rearward motion of the outermost rake member(s).

For a better understanding of the invention and to show how the same may be carried into effect, reference will now be made, by way of example, to the accompanying drawings, in which:
Figure 1 is a plan view of a hay-making machine in accordance with the invention, in which an outermost rake member can be adjusted about an upwardly directed pivot shaft to a second working position;
Figure 2 is a side view of a portion of the machine shown in Figure 1;
Figure 3 is a cross-sectional view taken on the line III-III in Figure 2;
Figure 4 shows, partly in a longitudinal cross-section, a portion of the machine shown in Figure 1;
Figure 5 is a plan view of a portion of the machine shown in Figure 1;
Figure 6 is a plan view of a second embodiment of the hay-making machine in accordance with the invention, in which an outermost rake member can be adjusted about an upwardly directed shaft to a second working position;
Figure 7 is a perspective view of an enlarged view of a portion of the machine shown in Figure 6;
Figure 8 is a longitudinal cross-sectional view taken on the line VIII-VIII in Figure 7;
Figure 9 is a cross-sectional view taken on the line IX-IX in Figure 8;
Figure 10 is a view taken in the direction of the arrow X in Figure 9;
Figure 11 is a cross-sectional view taken on the line XI-XI in Figure 8;
Figure 12 is a cross-sectional view taken on the line XII-XII in Figure 11, and
Figure 13 is a plan view of the hay-making machine in accordance with the invention, in which two rake members can jointly be pivoted rearwardly about an upwardly directed pivot shaft to a second working position.

In the drawings, corresponding component parts have been given the same reference numerals. In addition, the invention is in no way limited to the embodiments shown in the drawings and described here; they only serve as an illustration of the inventive idea, whose scope is defined by the claim.

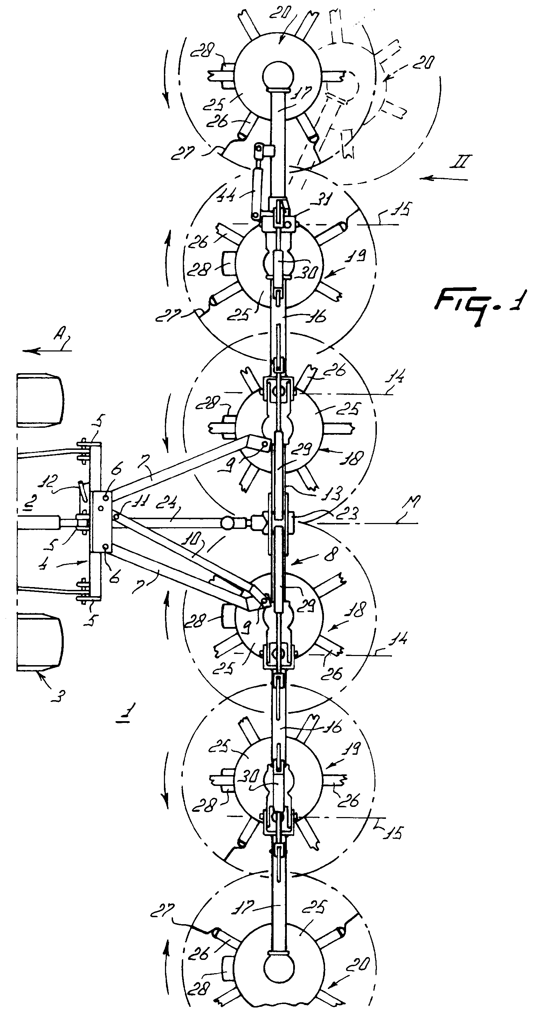

Figure 1 is a plan view of a hay-making machine 1, more in particular a rotary tedder, coupled to the three-point lifting hitch 2 of a tractor 3. The machine 1 is formed by two corresponding portions located on either side of the centre line M. For coupling same to the tractor 3, the machine 1 includes a three-point trestle 4 with coupling lugs 5. At that side which relative to the direction of operative travel A is located behind the trestle 4, there extend arms 7, which are pivotal about upwardly directed shafts 6 and connect the frame 8 of the machine 1 to the trestle 4. The arms 7, which diverge in the rearward direction, are each, capable of pivoting an upwardly directed shaft 9, connected to the frame 8. An adjusting bar 10, provided with locking apertures 11, acts on one of these upwardly directed shafts 9 so as to render it possible to move the frame 8 to an acute angle to the direction of operative travel A. A locking structure which might be used for this purpose is disclosed in EP-A-0273513. It should be noted that in this situation the frame 8 is connected to the trestle 4 in such a manner that it can freely reciprocate about the shafts 6 and 9, whilst, using the locking apertures 11 in the adjusting bar 10 and a locking pin 12, the frame 8 can be adjusted to a fixed position with respect to the direction of operative travel A.

The frame 8 consists of a central frame portion 13, which is connected to the trestle 4 via the arms 7, and, located at each of the ends thereof, two further frame portions which are coupled to each other and to the central frame portion 13 via pivot shafts 14 and 15 extending in the direction of operative travel. In the present embodiment, these further frame portions are each formed by an intermediate frame portion 16 and an outermost frame portion 17. The central frame portion 13 and the intermediate frame portions 16 and one of the outermost frame portions 17 together are alternatively also designated as "further frame portion"; this to distinguish them from the outermost frame portion 17 which in the second working position is moved rearwardly. Each of the said frame portions 13, 16, 17 is equipped, near its outermost ends, with a rake member which is pivotal about an upwardly directed rotary shaft relative to the relevant frame portion. The central frame portion 13 thus has two rake members 18, whilst each of the intermediate frame portions 16 possesses one rake member 19, and each of the outermost frame portions 17 possesses one rake member 20. The rake members 18, 19, 20 are drivable via drive shafts 21 which extend within the frame portions 13, 16, 17 and, in the region of the horizontal pivot shafts 14, 15, are interconnected via a dual universal joint 22. The shafts 21 and the dual universal joints 22 together are designated the drive mechanism. The drive shaft in the central frame portion 15 is connected to the power take-off shaft of the tractor 3 via a transmission gear box 23 and a coupling shaft 24. The transmission of the drive from the shafts to each of the rake members 18, 19, 20 is effected with the aid of a bevel gearwheel which is secured on the drive shaft 21 near the upwardly extending shaft of a rake member. This bevel gearwheel meshes with a bevel gearwheel which is rigidly connected to a central carrier 25 of a rake member. Each of the rake members has arms 26, at the end of which a tine group 27 is provided. In operation, the frame 8 bears on the soil by means of supporting elements constituted by wheels 28, each of which is fitted to the lower end of a rotary shaft of a relevant rake member.

In order to adjust the machine to the transport position, the intermediate frame portions 16 are pivotal together with the outermost frame portions 17 about the pivot shafts 14 with respect to the central frame portion 13, while the outermost frame portions 17 are pivotal about the pivot shafts 15 with respect to the intermediate frame portions 16. For that purpose, an adjusting cylinder 29 is arranged at some distance above the frame 8 between the central frame portion 13 and each of the intermediate frame portions 16, and an adjusting cylinder 30 is arranged between each of the intermediate frame portions 16 and an outermost frame portion 17. The intermediate frame portions 16 can be pivoted upwardly through approximately 90° with respect to the central frame portion 13, whilst the outermost frame portions are pivotal upwardly between 10 and 30°, preferably approximately 20°, with respect to the intermediate frame portions 16.

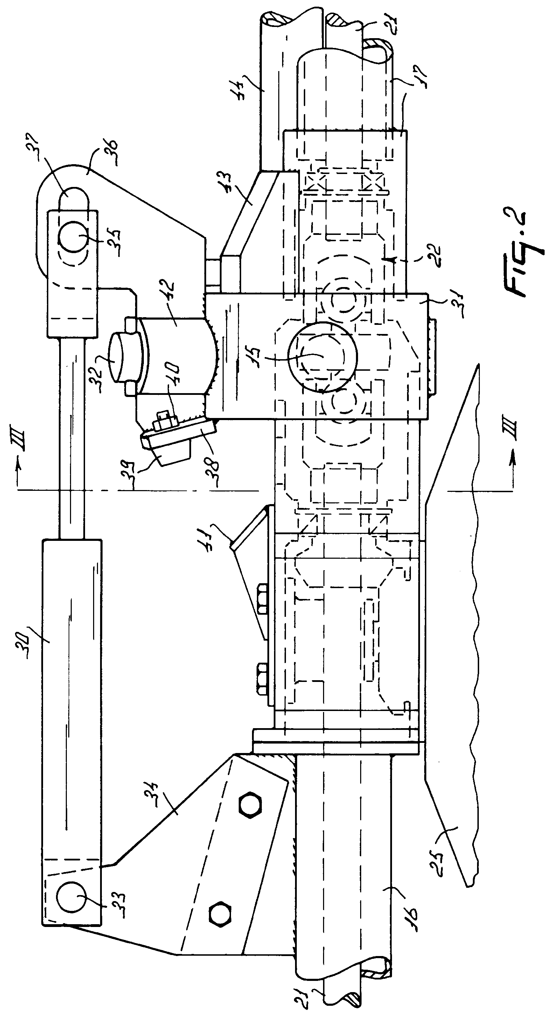

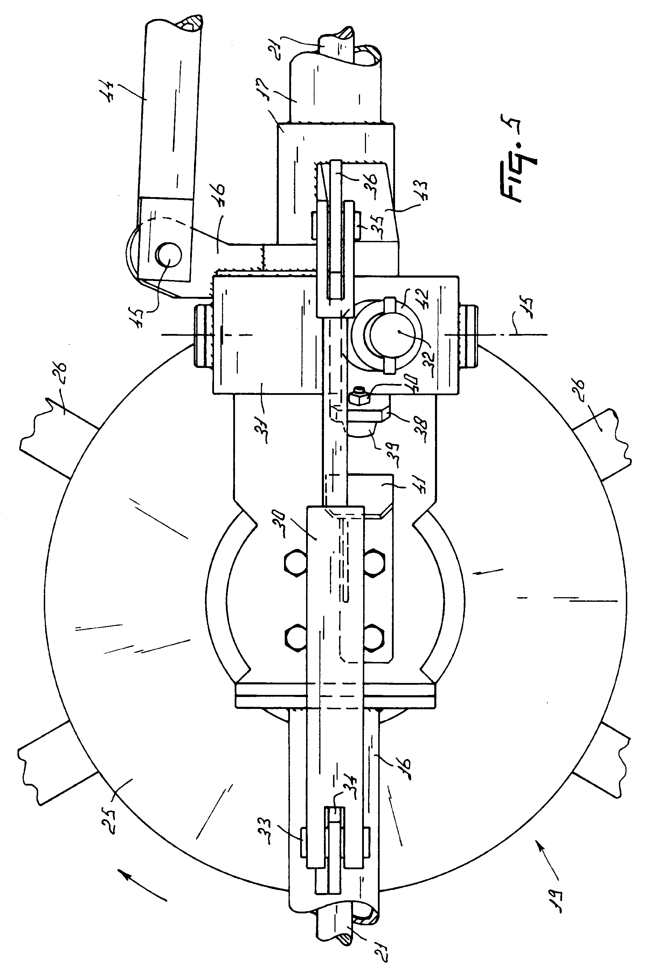

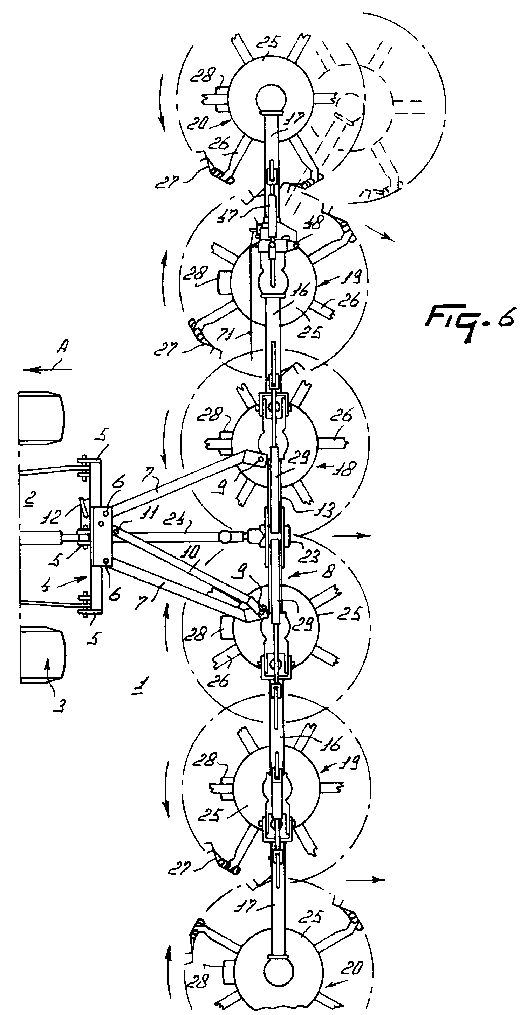

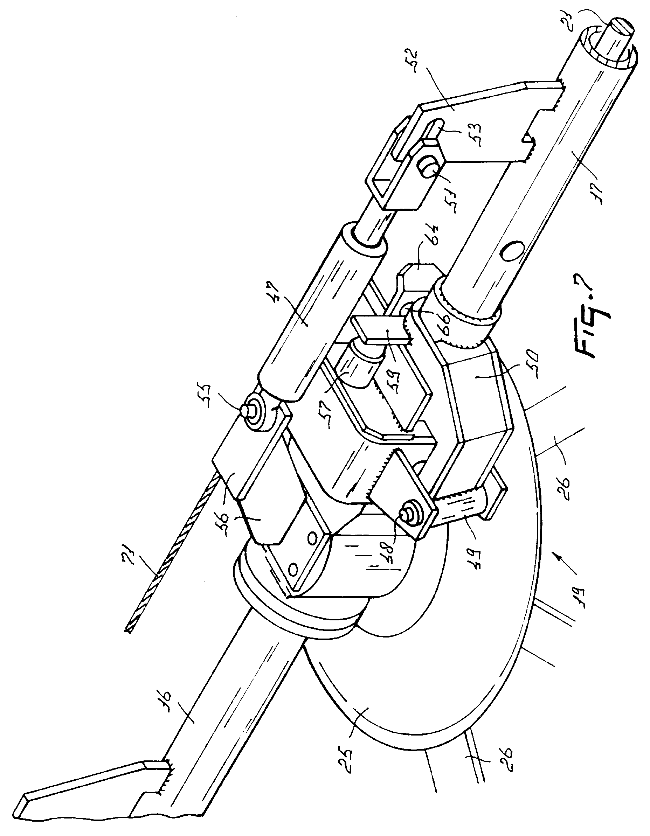

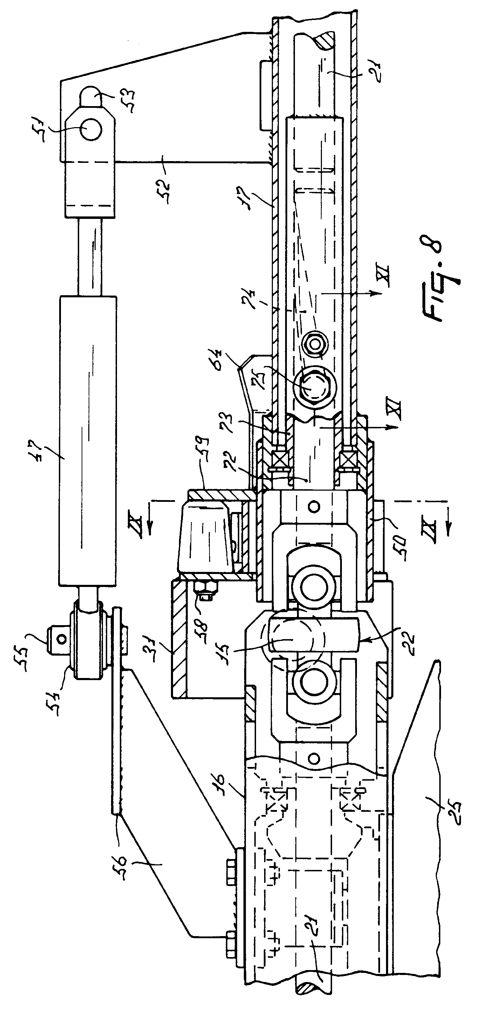

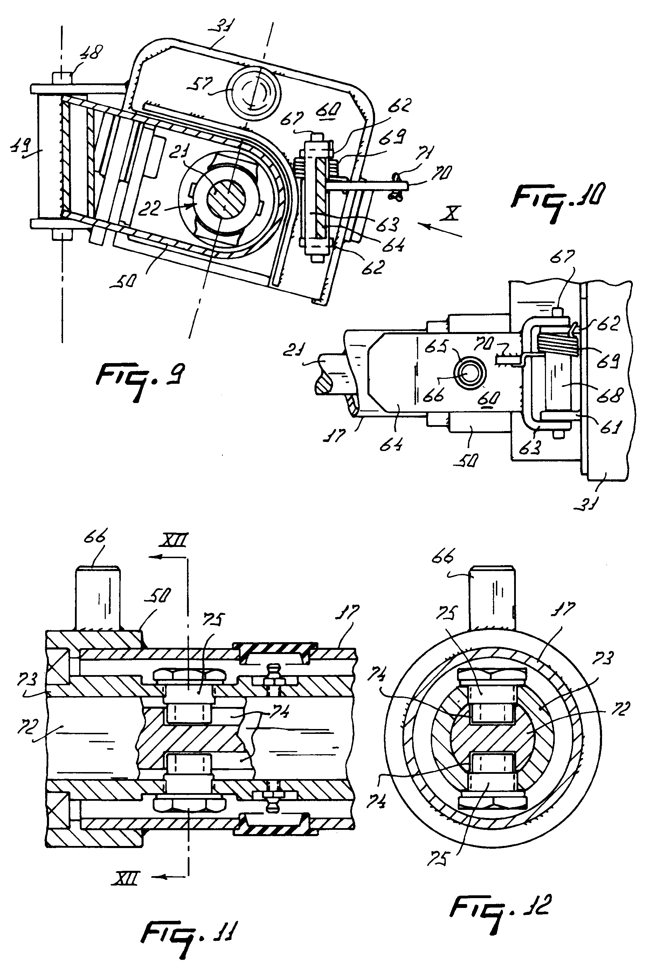

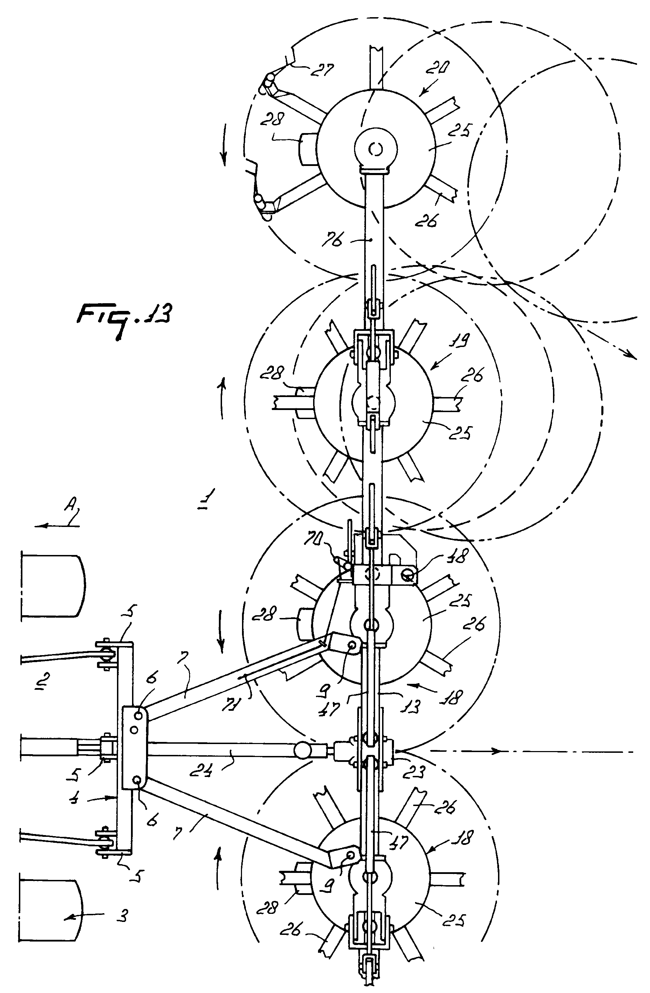

Figures 2 to 5 show details of the machine shown in Figure 1, and more specifically the pivotal construction disposed between an intermediate frame portion 16 and an outermost frame portion 17. The pivotal construction comprises a coupling element 31 which is connected, capably of pivoting about an upwardly directed pivot shaft 32, to the outermost frame portion 17 and, capably of pivoting about the pivot shaft 15 predominantly extending in the direction of operative travel, to the further frame portion, more specifically with the intermediate frame portion 16 forming part thereof. The position of the pivot shaft 15 relative to the dual universal joint 22 in the drive mechanism is disclosed in GB-A-2057239. So as to render it possible to pivot the coupling element 31 with the outermost frame portion 17 upwardly about the pivot shaft 15 relative to the intermediate frame portion 16, the adjusting cylinder 30 is disposed over the frame. This adjusting cylinder 30 has one side connected pivotably about a pin 33 extending in the direction of operative travel to a supporting plate 34 attached to the intermediate frame portion 16. The other side of the adjusting cylinder 30 is connected capably of pivoting about a pin 35 extending in the direction of operative travel to a supporting plate 36, which is secured in the midway point on top of the coupling element 31 and is provided with a slotted hole 37 which extends in the longitudinal direction of the adjusting cylinder 30 and in which the pin 35 is movable. Rigidly connected to the supporting plate 36 and the coupling element 31 there is a connecting plate 38, on which a buffer 39 is bolted by means of a bolt 40. By energizing the adjusting cylinder 30, the coupling element 31 can be pivoted upwardly with the outermost frame portion 17 with respect to the intermediate frame portion 16 until the buffer 39 abuts against a stop 41 disposed on the intermediate frame 16. The coupling element with the outermost frame portion 17 has then been pivoted upwardly through an angle between 10 and 30°, preferably through an angle of 20°, with respect to the intermediate frame portion 16. The slotted hole 37 in the supporting plate 36 has for its object to allow, when the machine is in the first working position, to a limited extent a free pivotability of the coupling element 31 with the outermost frame portion relative to the intermediate frame portion 16 so as to provide during the operating run over the field that the machine can easily adapt itself to the soil. A bush 42 is secured on top of the coupling element 31. The upwardly directed pivot shaft 32 is rotatable in this bush 42. Via a connecting element 43, the pivot shaft 32 is rigidly connected to the outermost frame portion 17, so that the outermost frame portion 17 together with the connecting element 43 and the upwardly directed pivot shaft 32 is rotatable in the bush 42 with respect to the coupling element 31 and the intermediate frame portion 16. The bush 42, and consequently the upwardly directed pivot shaft 32, are disposed such that their centre line intersects that of the drive mechanism. In addition, the centre line of the bush 42 and of the pivot shaft 32 intersects the centre line of the pivot shaft 15 extending in the direction of operative travel. Furthermore the centre line of the bush 42, and consequently that of the pivot shaft 32, encloses in a vertical plane in the direction of travel of the machine an angle with the centre line of the rotary shafts of the rake members. This angle is of the order of approximately 15° and is produced, since, when the machine is in operation, it is coupled with a slight forward slope to the tractor, whilst nevertheless the motion of the outermost frame portion 17 together with the rake members connected thereto must be effected in the rearward direction about a substantially vertical shaft.

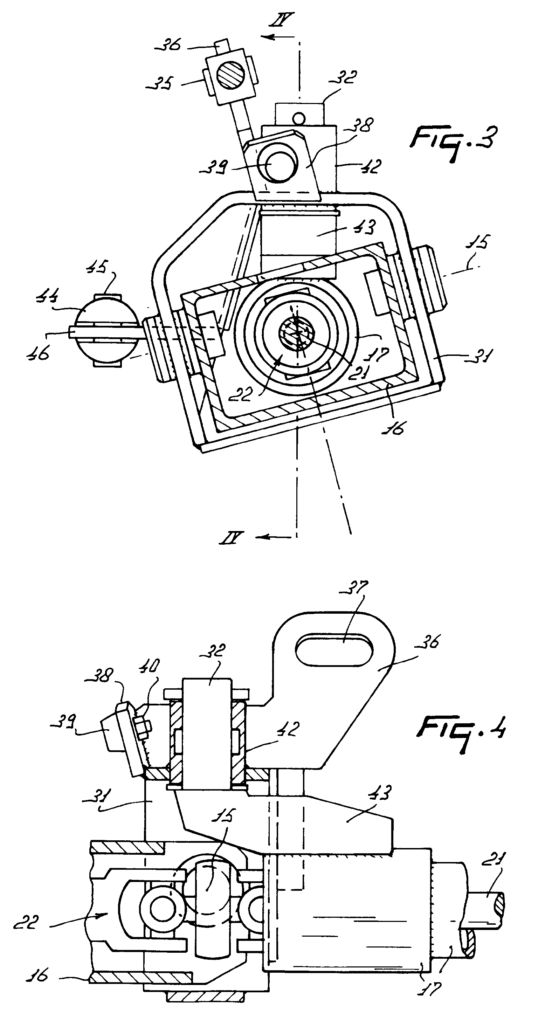

Figure 3 is a cross-sectional view of the frame which in the working position tilts forwardly, whilst the bush 42 with the upwardly directed pivot shaft 32 occupies a substantially vertical position. So as to enable the pivotal motion of the pivot shaft 32 in the bush 42, an adjusting cylinder 44 is present. Relative to the direction of operative travel of the machine, this adjusting cylinder 44 is disposed in front of the frame 8 of the machine and renders possible a rearward movement of the outermost frame portion 17 with respect to the intermediate frame portion. The adjusting cylinder 44 has one side connected capably of pivoting about an upwardly extending pin 45 to a supporting element 46 which is secured on the coupling element 31 and its other side capably of rotation about an upwardly extending pin and, via a supporting lug, to the outermost frame portion 17. The angle at which the outermost frame portion 17 can be moved rearwardly with the aid of this adjusting cylinder 44 relative to the further frame portion will basically be less than 90°. Usually, an angle of 30° will be sufficient to allow the crop which is flung by the rake members of the remaining frame portion in the lateral direction to be caught by the rearwardly pivoted rake member.

Figure 6 shows a second embodiment of a hay-making machine according to the invention. As regards its construction, this machine is predominantly identical to that shown in Figure 1.

In the embodiment of Figure 6, only one adjusting cylinder 47 is operative between the intermediate frame portion 16 and the outermost frame portion 17. This cylinder 47 extends to above the frame and can be used to effect both the upward and the rearward pivotal motion of the outermost frame portion 17 with respect to the intermediate frame portion 16. This construction is only possible when an upwardly directed pivot shaft 48 is present, which extends behind the drive mechanism. Put differently, the centre line of the upwardly directed pivot shaft 48 intersects the centre line of the drive mechanism. As is also the case in the first embodiment, the coupling element 31 is connected capably of pivoting, but now about the upwardly directed pivot shaft 48, to the outermost frame portion 17. The upwardly extending pivot shaft 48 is pivotal in a bush 49 which is rigidly connected to the outermost frame portion 17 with the aid of a connecting element 50. The adjusting cylinder 47 has one side connected capably of pivoting about a pin 51 extending in the direction of operative travel to a supporting plate 52 which is secured in the midway point on top of the outermost frame portion 17 and has a slotted hole 53 which extends in the longitudinal direction of the adjusting cylinder 47 and in which the pin 51 can move. The other side of the adjusting cylinder 47 is connected capably of pivoting about an upwardly directed pin 55 provided with a ball-and-socket joint 54 to a supporting element 56 which is rigidly connected on the intermediate frame portion 16. A buffer 57 is bolted to the coupling element 31 by means of a bolt 58, whilst a stop 59 is present on the connecting element 50, more particularly in such a way that the outermost frame portion 17 can indeed pivot rearwardly with respect to the intermediate frame portion 16, but, when the outermost frame portion 17 is pivoted back again to its original position, this outermost frame portion 17 cannot move further than to a position in which the outermost frame portion extends in the extension of the intermediate frame portion 16. During the rearward pivotal motion of the outermost frame portion 17 relative to the intermediate frame portion 16, the adjusting cylinder 47 is consequently pivoted simultaneously, as it is pivotal about the upwardly extending pin 55 with respect to the intermediate frame portion 16. Since the outermost frame portion 17 is only pivoted upwardly through a small angle, e.g. of the order of 20°, with respect to the intermediate frame portion 16, it is sufficient to provide a ball-and-socket joint 54 around the upwardly extending pin 55, to allow the adjusting cylinder 47 to follow this movement.

In the first working position, in which all the rake members of the machine are arranged in a row, the cylinder 47 must be in the released state, in order that the outermost frame portion 17 can pivot freely about the pivot shaft 15 extending in the direction of operative travel, so that, when it travels over the field, the machine can easily adapt itself to unevennesses of the soil. In order to prevent that, in response to the frictional force the machine experiences during travel over the field, the machine is adjusted to the second working position, in which the outermost rake member 20 is pivoted rearwardly, a locking mechanism 60 must be present to keep more particularly the outermost rake member 20 in the first working position. The locking mechanism 60 comprises lugs 61 and 62, which are connected to the coupling element, and a bracket 63 to which is rigidly connected a locking hook 64 which has an aperture 65 which can co-operate with a bulging portion 66 provided on the outermost frame portion 17 and fitting in this aperture. By means of a shaft 67 inserted through the lugs 61 and 62, the bracket 63 is rotatable with respect to the coupling element 31. Disposed between the lugs 61 and 62, around the shaft 67, there is a bush 68 around which a spring 69 is disposed. The spring 69 bears by means of one end against the lug 62 and its other end acts on a strip 70 which is rigidly connected to the locking hook 64. A cable 71 leading to the cab of the tractor, to which the machine is coupled, is connected to the end of this strip 70. By pulling the cable 71 against the action of the spring 69, the locking hook 64 is moved forwardly from the bulging portion 66. The outermost frame portion 17 is then in the unlocked condition and can be moved rearwardly. This rearward motion can be performed under the influence of the frictional force the machine experiences when it travels over the field, as well as by operating the adjusting cylinder 47. Inversely, by operating the cylinder 47, the outermost frame portion can again be returned to the position in which all the rake members are in one row, the locking hook 64 then automatically dropping over the bulging portion 66. When the adjusting cylinder 47 is then energized once again, the outermost frame portion 17 can be moved upwardly with respect to the intermediate frame portion 16.

Since the upwardly directed pivot shaft 48 is located at a certain distance behind the drive mechanism, a relatively large extension will occur in the drive mechanism when the outermost frame portion 17 is moved to the rear. In order to realize this extension in a simple manner, the shaft of the drive mechanism for driving the rake member 20 is provided at the outermost frame portion 17 with a telescopic construction. The shaft 21 which extends through the outermost frame portion 17 and via which the rake member 20 connected to this outermost frame portion 17 is driven, comprises two shaft sections 72 and 73 which can move relative to each other in a telescopically sliding manner.

When the tines of adjacent rake members mesh, and more in particular when they are in addition arranged such that they are trailing, problems may be encountered when the outermost rake member 20 is moved to the rear. The tines of the frame portion 19 and 20 could then regularly hit each other. To solve this problem, the shaft section 72 is provided with a threaded groove 74, whilst the shaft section 73 is fitted with a meshing element 75 which engages this groove 74 in order to realize, upon extension of the length of the shaft sections 72 and 73 relative to each other, at the same time a rotary motion of the two shaft sections relative to each other. The meshing element 75 is constituted by two bolts which are inserted through and tightened in the shaft section 73, the ends of these bolts being without thread, so that the bolts can move in the groove 74 by means of their smooth end. When the outermost frame portion 17 is moved rearwardly with respect to the further frame portion, there consequently occurs in this outermost frame portion 17 both an extension of the drive shaft 21 for the outermost rake member 20 and a phase shift in the drive of the shaft, by means of which the last rake member 20 is driven relative to the shaft, by means of which the rake member 19 is driven. This phase shift is of importance when groups of tines 27 are used which are trailing in such a manner that the groups of tines of the rake members 19 and 20 might hit each other when the rake member 20 is moved to its rearward position.

Figure 13 partly shows a hay-making machine of the type as illustrated in Figure 6, in which, however, the pivotal construction, with the aid of which the outermost frame portion is moved to the rear with respect to the further frame portion, is disposed between the central frame portion 13 and the intermediate frame portion 16. The pivotal construction with the upwardly directed pivot shaft 48, which is positioned behind the drive mechanism, as well as the locking mechanism, are fully identical to those of the machine shown in Figure 6, which has for its result that the outermost frame portion is now, however, formed by the intermediate frame portion 17 with the further frame portion 76 (which in the embodiment of Figure 6 is denoted the outermost frame portion 17) coupled thereto, so that the rake member 19 connected to the intermediate frame portion 16, and the rake member 20 connected to the further frame portion 77 can be moved as one integral whole to the rear about the upwardly directed pivot shaft 48, and the machine can thereby be adjusted to the second working position. In the first working position, in which all the rake members are arranged in one row, the machine is in all further respects identical to the machine in Figure 6, which means that also the manner of folding it to the transport position is identical to the manner for the machines described in the foregoing.

## Claims

1. A hay-making machine (1) for tedding mown crop, having a frame (8) in which a plurality of rake members (18, 19, 20), which in a first working position are arranged in a row, are drivably disposed about an upwardly directed rotary shaft, the frame (8) including a pivotal construction having a pivot shaft (15) which predominantly extends in the direction of operative travel for pivoting an outermost frame portion (17) equipped with at least one rake member (20) upwardly to a transport position with respect to the further frame portion (13, 16), the hay-making machine (1) further having a drive mechanism (21 to 24) which constitutes a driving connection (21, 22) between the rake members (18, 19, 20), the pivotal construction also including an upwardly directed pivot shaft (32, 48), about which the outermost frame portion can be pivoted with respect to the further frame portion (13, 16), characterized in that the centre line of said upwardly extending pivot shaft (32, 48) forms, in a vertical plane in the direction of operative travel, an angle with the centre line of the rotary shaft of a rake member, the machine (1) having a second working position in which the outermost frame portion (17) is pivoted through an angle of less than 90° about the upwardly directed shaft (32, 48) with respect to the further frame portion (13, 16) such that, relative to the direction of operative travel, it extends in the rearward direction.

2. A hay-making machine (1) as claimed in claim 1, characterized in that the pivotal construction is incorporated in the frame (8) within the peripheral circle described by the rake member (19) of that frame portion (16) that is not pivotal in the rearward direction, and is immediately adjacent to a rake member (20) of that frame portion (17) that is pivotal in the rearward direction.

3. A hay-making machine (1) as claimed in claim 1 or 2, characterized in that the angle between the centre lines of the pivot shaft (32, 48) and the rotary shaft substantially corresponds to the angle at which the machine is operative in a vertical plane.

4. A hay-making machine (1) as claimed in any of the preceding claims, characterized in that the angle between the centre line of the pivot shaft (32, 48) and that of the rotary shaft amounts to approximately 15°.

5. A hay-making machine (1) as claimed in any one of the preceding claims, characterized in that the centre line of the pivot shaft (14, 15) predominantly extending in the direction of operative travel intersects that of the upwardly directed pivot shaft (32, 48).

6. A hay-making machine (1) as claimed in one of the preceding claims, characterized in that, in the region of the pivotal construction, the drive mechanism (21 to 24) is provided with a dual universal joint (22).

7. A hay-making machine (1) as claimed in any one of the preceding claims, characterized in that the outermost frame portion (17) is upwardly pivotal with respect to the further frame portion (13, 16) through an angle between approximately 10 and 30°, more in particular approximately 20°, whilst the remaining frame portion (13, 16) includes at least one further pivotal construction for pivoting at least the outermost rake member (19) of the further frame portion (13, 16) through approximately 90° relative to an inner rake member (18) of the further frame portion (13, 16).

8. A hay-making machine (1) as claimed in any one of the preceding claims, characterized in that, in the region of the pivotal construction, an adjusting cylinder (30) is present, with the aid of which the outermost frame portion (17) can be pivoted about the pivot shaft (15) predominantly extending in the direction of operative travel, whilst the pivotal motion about the upwardly directed pivot shaft (32, 48) is performed in response to the frictional force the machine experiences during the forward travel over the field.

9. A hay-making machine (1) as claimed in claim 8, characterized in that the pivotal construction includes a locking mechanism (60) for keeping the machine (1) in the first working position and for enabling an upward folding motion to the transport position.

10. A hay-making machine (1) as claimed in claim 9, characterized in that the locking mechanism (60), in the position in which it is released, enables a rearward motion of the outermost frame portion (17) with respect to the further frame portion (13, 16).

11. A hay-making machine (1) as claimed in claim 9 or 10, characterized in that the locking mechanism (60) comprises a locking hook (64) which is connected to the further frame portion (13, 16) and is provided with an aperture (65), this locking hook (64) co-operating with a bulging portion (66) which is provided in the outermost frame portion (17) and fits in the aperture (65) of the locking hook (64).

12. A hay-making machine (1) as claimed in any one of claims 8 to 11, characterized in that the rotary motion of the outermost frame portion (17) in the rearward direction amounts to approximately 30°.

13. A hay-making machine (1) as claimed in any one of the preceding claims, characterized in that the angle through which the outermost frame portion (17) is pivotal in the rearward direction can be adjusted hydraulically.

14. A hay-making machine (1) as claimed in claim 13, characterized in that, in the region of the pivotal construction, one or more adjusting cylinders (30, 47) are provided, with the aid of which the outermost frame portion (17) can be pivoted relative to the further frame portion (13, 16) about the pivot shaft predominantly extending in the direction of operative travel (15) and about the upwardly directed pivot shaft (32, 48).

15. A hay-making machine (1) as claimed in any one of the preceding claims, characterized in that the centre line of the upwardly extending pivot shaft (32, 48) intersects that of the drive mechanism (21 to 24).

16. A hay-making machine (1) as claimed in claim 15, characterized in that a first adjusting cylinder (30) is present, which extends to above the frame (8) and with the aid of which the outermost frame portion (17) can be pivoted upwardly, and a second adjusting cylinder (47) which extends alongside of and, with respect to the direction of operative travel of the machine (1), in front of the frame (8) and with the aid of which the outermost frame portion (17) can be pivoted rearwardly.

17. A hay-making machine (1) as claimed in claim 16, characterized in that the pivotal construction comprises a coupling element (31) which is connected capably of pivoting about the upwardly directed pivot shaft (32, 48) to the outermost frame portion (17) and is connected capably of pivoting about the pivot shaft (15) predominantly extending in the direction of operative travel to the further frame portion (13, 16), the first adjusting cylinder (30) being operative between the coupling element (31) and the further frame portion (13, 16) and the second adjusting cylinder (47) between the coupling element (31) and the outermost frame portion (17).

18. A hay-making machine (1) as claimed in any one of the claims 1 to 14, characterized in that the centre line of the upwardly directed pivot shaft (32, 48) intersects that of the drive mechanism (21 to 24), with respect to the direction of operative travel, at the rear side.

19. A hay-making machine (1) as claimed in claim 18, characterized in that an adjusting cylinder (47) is present, which extends to above the frame (8) and with the aid of which the outermost frame portion (17) can be pivoted both upwardly and rearwardly.

20. A hay-making machine (1) as claimed in any one of claims 1 to 11 or 19, characterized in that the pivotal construction comprises a coupling element (31) which is connected capably of pivoting about the upwardly directed pivot shaft (32, 48) to the outermost frame portion (17) and is connected capably of pivoting about the pivot shaft (15) predominantly extending in the direction of operative travel to the further frame portion (13, 16), the adjusting cylinder (47) being connected about a pin (51) predominantly extending in the direction of operative travel to the outermost frame portion (17) and to the further frame portion (13, 16) about an upwardly directed pin (55) which is equipped with a ball-and-socket joint.

21. A hay-making machine (1) as claimed in claim 20, characterized in that the centre line of the upwardly directed pin (55) intersects both the centre line of the pivot shaft (15) predominantly extending in the direction of operative travel and that of the drive mechanism (21 to 24).

22. A hay-making machine (1) as claimed in any one of the preceding claims, characterized in that the shaft (21) of the drive mechanism (21 to 24) for driving the rake member(s) (18, 19, 20) has at the outermost frame portion (17) a telescopically sliding construction, which enables this shaft to be extended.

23. A hay-making machine (1) as claimed in claim 22, characterized in that the telescope construction comprises two shaft sections (72, 73), one shaft section (72) being provided with a threaded groove (74) and the other (73) with a meshing element (75) which engages this groove (74) so as to enable, upon extension of the length of two shaft sections (72, 73) with respect to each other, rotation of the two shaft sections (72, 73) relative to each other.

## Patentansprüche

1. Heuwerbungsmaschine (1) zum Zetten von Mähgut, mit einem Rahmen (8), in dem mehrere Rechkörper (18, 19, 20), die in einer ersten Arbeitslage in einer Reihe angeordnet sind, um eine aufwärts gerichtete Drehachse antreibbar angeordnet sind, wobei der Rahmen (8) eine Schwenkvorrichtung mit einer sich überwiegend in Arbeitsrichtung erstreckenden Schwenkachse (15) aufweist, um einen äußeren Rahmenteil (17), der mit mindestens einem Rechkörper (20) versehen ist, relativ zu dem weiteren Rahmenteil (13, 16) nach oben in eine Transportlage zu schwenken, wobei die Heuwerbungsmaschine (1) ferner einen Antriebsmechanismus (21 bis 24) aufweist, der eine Antriebsverbindung (21, 22) zwischen den Rechkörpern (18, 19, 20) herstellt, und wobei die Schwenkvorrichtung außerdem eine aufwärts gerichtete Schwenkachse (32, 48) aufweist, um die der äußere Rahmenteil relativ zu dem weiteren Rahmenteil (13, 16) schwenkbar ist,
dadurch gekennzeichnet, daß die Mittellinie der aufwärts gerichteten Schwenkachse (32, 48) in einer vertikalen, in Arbeitsrichtung stehenden Ebene einen Winkel mit der Mittellinie der Drehachse eines Rechkörpers bildet, wobei die Maschine (1) eine zweite Arbeitslage aufweist, in der der äußere Rahmenteil (17) relativ zu dem weiteren Rahmenteil (13, 16) über einen Winkel von weniger als 90° um die aufwärts gerichtete Achse (32, 48) derart geschwenkt wird, daß er sich in bezug auf die Arbeitsrichtung nach hinten erstreckt.

2. Heuwerbungsmaschine (1) nach Anspruch 1,
dadurch gekennzeichnet, daß die Schwenkvorrichtung in dem Rahmen (8) innerhalb der Kreislinie angeordnet ist, die von dem Rechkörper (19) desjenigen Rahmenteiles (16) beschrieben wird, der nicht nach hinten schwenkbar ist, und daß die Schwenkvorrichtung unmittelbar an einen Rechkörper (20) desjenigen Rahmenteiles (17) angrenzt, der nach hinten schwenkbar ist.

3. Heuwerbungsmaschine (1) nach Anspruch 1 oder 2,
dadurch gekennzeichnet, daß der Winkel zwischen den Mittellinien der Schwenkachse (32, 48) und der Drehachse im wesentlichen dem Winkel entspricht, in welchem die Maschine in einer vertikalen Ebene wirksam ist.

4. Heuwerbungsmaschine (1) nach einem der vorhergehenden Ansprüche,
dadurch gekennzeichnet, daß der Winkel zwischen der Mittellinie der Schwenkachse (32, 48) und der der Drehachse etwa 15° beträgt.

5. Heuwerbungsmaschine (1) nach einem der vorhergehenden Ansprüche,
dadurch gekennzeichnet, daß die Mittellinie der sich überwiegend in Arbeitsrichtung erstreckenden Schwenkachse (14, 15) die Mittellinie der aufwärts gerichteten Schwenkachse (32, 48) schneidet.

6. Heuwerbungsmaschine (1) nach einem der vorhergehenden Ansprüche,
dadurch gekennzeichnet, daß der Antriebsmechanismus (21 bis 24) im Bereich der Schwenkvorrichtung ein Doppel-Universalgelenk (22) aufweist.

7. Heuwerbungsmaschine (1) nach einem der vorhergehenden Ansprüche,
dadurch gekennzeichnet, daß der äußere Rahmenteil (17) relativ zu dem weiteren Rahmenteil (13, 16) um einen Winkel von etwa 10° bis 30°, insbesondere etwa 20°, nach oben schwenkbar ist, wobei der übrige Rahmenteil (13, 16) mindestens eine weitere Schwenkvorrichtung aufweist, um zumindest den äußeren Rechkörper (19) des weiteren Rahmenteiles (13, 16) um etwa 90° relativ zu einem inneren Rechkörper (18) des weiteren Rahmenteiles (13, 16) zu verschwenken.

8. Heuwerbungsmaschine (1) nach einem der vorhergehenden Ansprüche,
dadurch gekennzeichnet, daß im Bereich der Schwenkvorrichtung ein Stellzylinder (30) angeordnet ist, mittels dessen der äußere Rahmenteil (17) um die sich überwiegend in Arbeitsrichtung erstreckende Schwenkachse (15) schwenkbar ist, wobei die Schwenkbewegung um die aufwärts gerichtete Schwenkachse (32, 48) als Reaktion auf die Reibung erfolgt, der die Maschine während der Vorwärtsbewegung auf dem Feld ausgesetzt ist.

9. Heuwerbungsmaschine (1) nach Anspruch 8,
dadurch gekennzeichnet, daß die Schwenkvorrichtung eine Verriegelungsmechanik (60) aufweist, um die Maschine (1) in der ersten Arbeitslage zu halten und ein Hochklappen in die Transportlage zu ermöglichen.

10. Heuwerbungsmaschine (1) nach Anspruch 9,
dadurch gekennzeichnet, daß die Verriegelungsmechanik (60) in ihrer Öffnungslage eine Rückwärtsbewegung des äußeren Rahmenteiles (17) relativ zu dem weiteren Rahmenteil (13, 16) erlaubt.

11. Heuwerbungsmaschine (1) nach Anspruch 9 oder 10,
dadurch gekennzeichnet, daß die Verriegelungsmechanik (60) einen Verriegelungshaken (64) aufweist, der mit dem weiteren Rahmenteil (13, 16) verbunden ist und eine Öffnung (65) aufweist, wobei dieser Verriegelungshaken (64) mit einem Buckel (66) zusammenwirkt, der im äußeren Rahmenteil (17) vorgesehen ist und in die Öffnung (65) des Verriegelungshakens (64) hineinpaßt.

12. Heuwerbungsmaschine (1) nach einem der Ansprüche 8 bis 11,
dadurch gekennzeichnet, daß die Schwenkbewegung des äußeren Rahmenteiles (17) nach hinten über einen Winkel von etwa 30° erfolgt.

13. Heuwerbungsmaschine (1) nach einem der vorhergehenden Ansprüche,
dadurch gekennzeichnet, daß der Winkel, um den der äußere Rahmenteil (17) nach hinten verschwenkbar ist, hydraulisch einstellbar ist.

14. Heuwerbungsmaschine (1) nach Anspruch 13,
dadurch gekennzeichnet, daß im Bereich der Schwenkvorrichtung ein oder mehrere Stellzylinder (30, 47) angeordnet sind, mit deren Hilfe der äußere Rahmenteil (17) relativ zu dem weiteren Rahmenteil (13, 16) um die sich überwiegend in Arbeitsrichtung erstreckende Schwenkachse (15) sowie um die aufwärts gerichtete Schwenkachse (32, 48) verschwenkbar ist.

15. Heuwerbungsmaschine (1) nach einem der vorhergehenden Ansprüche,
dadurch gekennzeichnet, daß die Mittellinie der aufwärts gerichteten Schwenkachse (32, 48) die Mittellinie des Antriebsmechanismus (21 bis 24) schneidet.

16. Heuwerbungsmaschine (1) nach Anspruch 15,
dadurch gekennzeichnet, daß ein erster Stellzylinder (30) vorhanden ist, der sich bis über den Rahmen (8) hinaus erstreckt, und mittels dessen der äußere Rahmenteil (17) nach oben zu schwenken ist, sowie ein zweiter Stellzylinder (47), der sich entlang dem Rahmen (8) und in bezug auf die Arbeitsrichtung der Maschine (1) vor diesem erstreckt, und mittels dessen der äußere Rahmenteil (17) nach hinten zu schwenken ist.

17. Heuwerbungsmaschine (1) nach Anspruch 16,
dadurch gekennzeichnet, daß die Schwenkvorrichtung ein Anschlußelement (31) aufweist, das um die aufwärts gerichtete Schwenkachse (32, 48) schwenkbar mit dem äußeren Rahmenteil (17) verbunden ist und um die sich überwiegend in Arbeitsrichtung erstreckende Schwenkachse (15) schwenkbar mit dem weiteren Rahmenteil (13, 16) verbunden ist, wobei der erste Stellzylinder (30) zwischen dem Anschlußelement (31) und dem weiteren Rahmenteil (13, 16) und der zweite Stellzylinder (47) zwischen dem Anschlußelement (31) und dem äußeren Rahmenteil (17) wirksam sind.

18. Heuwerbungsmaschine (1) nach einem der Ansprüche 1 bis 14,
dadurch gekennzeichnet, daß die Mittellinie der aufwärts gerichteten Schwenkachse (32, 48) die Mittellinie des Antriebsmechanismus (21 bis 24) in bezug auf die Fahrtrichtung auf der Rückseite schneidet.

19. Heuwerbungsmaschine (1) nach Anspruch 18,
dadurch gekennzeichnet, daß ein Stellzylinder (47) vorhanden ist, der sich bis über den Rahmen (8) hinaus erstreckt, und mittels dessen der äußere Rahmenteil (17) sowohl nach oben als auch nach hinten zu schwenken ist.

20. Heuwerbungsmaschine (1) nach einem der Ansprüche 1 bis 11 oder 19,
dadurch gekennzeichnet, daß die Schwenkvorrichtung ein Anschlußelement (31) aufweist, das um die aufwärts gerichtete Schwenkachse (32, 48) schwenkbar mit dem äußeren Rahmenteil (17) und um die sich überwiegend in Arbeitsrichtung erstreckende Schwenkachse (15) schwenkbar mit dem weiteren Rahmenteil (13, 16) verbunden ist, wobei der Stellzylinder (47) über einen sich überwiegend in Arbeitsrichtung erstreckenden Bolzen (51) mit dem äußeren Rahmenteil (17) und mit dem weiteren Rahmenteil (13, 16) über einen aufwärts gerichteten Bolzen (55) verbunden ist, der ein Kugelgelenk aufweist.

21. Heuwerbungsmaschine (1) nach Anspruch 20,
dadurch gekennzeichnet, daß die Mittellinie des aufwärts gerichteten Bolzens (55) sowohl die Mittellinie der sich überwiegend in Arbeitsrichtung erstreckenden Schwenkachse (15) als auch die des Antriebsmechanismus (21 bis 24) schneidet.

22. Heuwerbungsmaschine (1) nach einem der vorhergehenden Ansprüche,
dadurch gekennzeichnet, daß die Welle (21) des Antriebsmechanismus (21 bis 24) zum Antreiben des/der Rechkörper(s) (18, 19, 20) am äußeren Rahmenteil (17) eine teleskopisch verschiebbare Vorrichtung aufweist, die ein Verlängern dieser Welle ermöglicht.

23. Heuwerbungsmaschine (1) nach Anspruch 22, dadurch gekennzeichnet, daß die teleskopische Vorrichtung zwei Wellenteilstücke (72, 73) aufweist, wobei das eine Wellenteilstück (72) mit einer Gewindenut (74) und das andere Wellenteilstück (73) mit einem Eingriffselement (75) versehen ist, das in diese Nut (74) eingreift, um im Falle einer Ausdehnung der Länge der beiden Wellenteilstücke (72, 73) relativ zueinander eine Drehung der beiden Wellenteilstücke (72, 73) relativ zueinander zu ermöglichen.

## Revendications

1. Machine de fenaison (1) pour retourner une récolte fauchée, ayant un châssis (8) dans lequel une pluralité d'éléments formant râteau (18, 19, 20), qui dans une première position active sont agencés dans une rangée, sont disposés de manière à pouvoir être entraînés autour d'un arbre de rotation dirigé vers le haut, le châssis (8) comportant une construction pivotante ayant un arbre de pivotement (15) qui s'étend de manière prédominante dans la direction du déplacement actif pour faire pivoter une partie de châssis la plus à l'extérieur (17) munie d'au moins un élément formant râteau (20) vers le haut vers une position de transport par rapport à la partie de châssis supplémentaire (13, 16), la machine de fenaison (1) ayant de plus un mécanisme d'entraînement (21 à 24) qui constitue une connexion menante (21, 22) entre les éléments formant râteau (18, 19, 20), la construction pivotante comportant aussi un arbre de pivotement dirigé vers le haut (32, 48), autour duquel la partie de châssis la plus à l'extérieur peut pivoter par rapport à la partie de châssis supplémentaire (13, 16), caractérisée en ce que l'axe central dudit arbre de pivotement s'étendant vers le haut (32, 48) forme, dans un plan vertical s'étendant dans la direction de déplacement actif, un angle avec l'axe central de l'arbre de rotation d'un élément formant râteau, la machine (1) ayant une seconde position active dans laquelle la partie de châssis la plus à l'extérieur (17) est pivotée à travers un angle inférieur à 90° autour de l'arbre dirigé vers le haut (32, 48) par rapport à la partie de châssis supplémentaire (13, 16) de sorte que, par rapport à la direction de déplacement actif, elle s'étende dans la direction vers l'arrière.

2. Machine de fenaison (1) selon la revendication 1, caractérisée en ce que la construction pivotante est incorporée dans le châssis (8) dans le cercle périphérique décrit par l'élément formant râteau (19) de la partie de châssis (16) qui n'est pas pivotante dans la direction vers l'arrière, et est immédiatement adjacente à un élément formant râteau (20) de la partie de châssis (17) qui est pivotante dans la direction vers l'arrière.

3. Machine de fenaison (1) selon la revendication 1 ou 2, caractérisée en ce que l'angle entre l'axe central de l'arbre de pivotement (32, 48) et l'arbre de rotation correspond sensiblement à l'angle au niveau duquel la machine est active dans un plan vertical.

4. Machine de fenaison (1) selon l'une quelconque des revendications précédentes, caractérisée en ce que l'angle entre l'axe central de l'arbre de pivotement (32, 48) et celui de l'arbre de rotation a une valeur d'approximativement 15°.

5. Machine de fenaison (1) selon l'une quelconque des revendications précédentes, caractérisée en ce que l'axe central de l'arbre de pivotement (14, 15) s'étendant de manière prédominante dans la direction de déplacement actif recoupe celui de l'arbre de pivotement dirigé vers le haut (32, 48).

6. Machine de fenaison (1) selon l'une quelconque des revendications précédentes, caractérisée en ce que, dans la zone de la construction pivotante, le mécanisme d'entraînement (21 à 24) est muni d'un double joint universel (22).

7. Machine de fenaison (1) selon l'une quelconque des revendications précédentes, caractérisée en ce que la partie de châssis la plus à l'extérieur (17) est pivotante vers le haut par rapport à la partie de châssis supplémentaire (13, 16) sur un angle compris entre approximativement 10 et 30°, en particulier supérieur à approximativement 20°, alors que la partie de châssis supplémentaire (13, 16) comporte au moins une autre construction pivotante destinée à faire pivoter au moins l'élément formant râteau le plus à l'extérieur (19) de la partie de châssis supplémentaire (13, 16) sur approximativement 90° par rapport à un élément formant râteau intérieur (18) de la partie de châssis supplémentaire (13, 16).

8. Machine de fenaison (1) selon l'une quelconque des revendications précédentes, caractérisée en ce que, dans la zone de la construction pivotante, un cylindre de réglage (30) est présent, à l'aide duquel la partie de châssis la plus à l'extérieur (17) peut pivoter autour de l'arbre de pivotement (15) s'étendant de manière prédominante dans la direction de déplacement actif, alors que le mouvement de pivotement autour de l'arbre de pivotement dirigé vers le haut (32, 48) est réalisé en réponse à la force de friction que la machine rencontre pendant le déplacement vers l'avant sur le champ.

9. Machine de fenaison (1) selon la revendication 8, caractérisée en ce que la construction pivotante comporte un mécanisme de verrouillage (60) destiné à maintenir la machine (1) dans la première position active et à permettre un mouvement de pliage vers le haut vers la position de transport.

10. Machine de fenaison (1) selon la revendication 9, caractérisée en ce que le mécanisme de verrouillage (60) dans la position dans laquelle il est libéré, permet un mouvement vers l'arrière de la partie de châssis la plus à l'extérieur (17) par rapport à la partie de châssis supplémentaire (13, 16).

11. Machine de fenaison (1) selon la revendication 9 ou 10, caractérisée en ce que le mécanisme de verrouillage (60) comporte un crochet de verrouillage (64) qui est relié à la partie de châssis supplémentaire (13, 16) et est muni d'une ouverture (65), ce crochet de verrouillage (64) coopérant avec une partie de renflement (66) qui est agencée dans la partie de châssis la plus à l'extérieur (17) et s'agence dans l'ouverture (65) du crochet de verrouillage (64).

12. Machine de fenaison (1) selon l'une quelconque des revendications 8 à 11, caractérisée en ce que le mouvement rotatif de la partie de châssis la plus à l'extérieur (17) dans la direction vers l'arrière a une valeur d'approximativement 30°.

13. Machine de fenaison (1) selon l'une quelconque des revendications précédentes, caractérisée en ce que l'angle à travers lequel la partie de châssis la plus à l'extérieur (17) pivote dans la direction vers l'arrière peut être ajusté hydrauliquement.

14. Machine de fenaison (1) selon la revendication 13, caractérisée en ce que, dans la zone de la construction pivotante, un ou plusieurs cylindres de réglage (30, 47) sont agencés, à l'aide desquels la partie de châssis la plus à l'extérieur (17) peut pivoter par rapport à la partie de châssis supplémentaire (13, 16) autour de l'axe de pivotement s'étendant de manière prédominante dans la direction du déplacement actif (15) et autour de l'arbre de pivotement dirigé vers le haut (32, 48).

15. Machine de fenaison (1) selon l'une quelconque des revendications précédentes, caractérisée en ce que l'axe central de l'arbre de pivotement s'étendant vers le haut (32, 48) recoupe celui du mécanisme d'entraînement (21 à 24).

16. Machine de fenaison (1) selon la revendication 15, caractérisée en ce qu'un premier vérin de réglage (30) est présent, qui s'étend sur le dessus du châssis (8) et à l'aide duquel la partie de châssis la plus à l'extérieur (17) peut pivoter vers le haut, et un second vérin de réglage (47) qui s'étend le long du châssis (8) et à l'avant de celui-ci, par rapport à la direction de déplacement actif de la machine (1), et à l'aide duquel la partie de châssis la plus à l'extérieur (17) peut pivoter vers l'arrière.

17. Machine de fenaison (1) selon la revendication 16, caractérisée en ce que la construction pivotante comporte un élément d'accouplement (31) qui est relié, d'une manière pouvant pivoter autour de l'arbre de pivotement dirigé vers le haut (32, 48), à la partie de châssis la plus à l'extérieur (17) et est relié, d'une manière pouvant pivoter autour de l'arbre de pivotement (15) s'étendant de manière prédominante dans la direction de déplacement actif, à la partie de châssis supplémentaire (13, 16), le premier vérin de réglage (30) étant actif entre l'élément d'accouplement (31) et la partie de châssis supplémentaire (13, 16) et le second vérin de réglage (47) étant actif entre l'élément d'accouplement (31) et la partie de châssis la plus à l'extérieur (17).

18. Machine de fenaison (1) selon l'une quelconque des revendications 1 à 14, caractérisée en ce que l'axe central de l'arbre de pivotement dirigé vers le haut (32, 48) recoupe celui du mécanisme d'entraînement (21 à 24), par rapport à la direction de déplacement actif, au niveau du côté arrière.

19. Machine de fenaison (1) selon la revendication 18, caractérisée en ce qu'un vérin de réglage (47) est présent, qui s'étend sur le dessus du châssis (8) et à l'aide duquel la partie de châssis la plus à l'extérieur (17) peut pivoter à la fois vers le haut et vers l'arrière.

20. Machine de fenaison (1) selon l'une quelconque des revendications 1 à 11 ou 19, caractérisée en ce que la construction pivotante comporte un élément d'accouplement (31) qui est relié, de manière à pouvoir pivoter autour de l'arbre de pivotement dirigé vers le haut (32, 48), à la partie de châssis la plus à l'extérieur (17) et est relié, de manière à pouvoir pivoter autour de l'arbre de pivotement (15) s'étendant de manière prédominante dans la direction de déplacement actif, à la partie de châssis supplémentaire (13, 16), le vérin de réglage (47) étant relié autour d'un axe (51) s'étendant de manière prédominante dans la direction de déplacement actif à la partie de châssis la plus à l'extérieur (17) et à la partie de châssis supplémentaire (13, 16) autour d'un axe dirigé vers le haut (55) qui est muni d'un joint à rotule sphérique.

21. Machine de fenaison (1) selon la revendication 20, caractérisée en ce que l'axe central du tourillon dirigé vers le haut (55) recoupe à la fois l'axe central de l'arbre de pivotement (15) s'étendant de manière prédominante dans la direction de déplacement actif et celui du mécanisme d'entraînement (21 à 24).

22. Machine de fenaison (1) selon l'une quelconque des revendications précédentes, caractérisée en ce que l'arbre (21) du mécanisme d'entraînement (21 à 24) destiné à entraîner le ou les éléments formant râteau (18, 19, 20) a, au niveau de la partie de châssis la plus à l'extérieur (17), une construction coulissante de manière télescopique, qui permet à cet arbre d'être étendu.

23. Machine de fenaison (1) selon la revendication 22, caractérisée en ce que la construction télescopique comporte deux tronçons d'arbre (72, 73), un premier troncon d'arbre (72) étant muni d'une gorge filetée (74) et l'autre (73) ayant un élément d'entraînement (75) qui engrène avec cette gorge (74) de manière à permettre, lors de la mise en extension de la longueur des deux tronçons d'arbre (72, 73) l'un par rapport à l'autre, la mise en rotation des deux tronçons d'arbre (72, 73) l'un par rapport à l'autre.
